# EUROPÄISCHE PATENTANMELDUNG

(11) **EP 0 893 678 A1**
(43) Veröffentlichungstag der Anmeldung: **27.01.1999**
(21) Anmeldenummer: 97112612.3
(22) Anmeldetag: 23.07.1997
(51) Int. Cl.: G01M 3/02, G01M 3/28

(54) **Ringförmiger Dichtungskörper**

(71) Anmelder: Weatherford/Lamb Inc., Wilmington, DE 19805 (US)
(72) Erfinder: Jänsch, Manfred, 30826 Garbsen (DE)
(74) Vertreter: Arendt, Helmut, Dipl.-Ing.

(57) **Zusammenfassung**

Zur Verbesserung der radialen Verformbarkeit eines ring- oder hülsenförmigen, in Axialrichtung zusammendrückbaren Dichtungskörpers aus elastomerem Material, sind in seinem Außenumfang lamellenförmige Armierungselemente eingebettet, mit welchen der Dichtungskörper frontseitig an einem Stützring anliegt. Das rückwärtige Ende wird von einem Druckring begrenzt. Die Lamellen sind an ihren dem Stützring zugewandten Enden abgerundet. Diese enden mit Abstand vor dem druckringseitigen Dichtungskörperende. Die radial inneren Kanten der Lamellen, ausgehend von den abgerundeten Enden, sind radial auswärts weisend abgeschrägt.

## Beschreibung

Die Erfindung betrifft einen ring- oder hülsenförmigen, in Axialrichtung durch Druck belastbaren Dichtungskörper aus elastomerem Material mit in da Außenumfang eingebetteten, sich axial erstreckenden, lamellenförmigen Armierungselementen, mit welchen der Dichtungskörper frontseitig an einem Stützring anliegt und an seinem gegenüberliegenden Ende von einem Druckring begrenzt wird, insbesondere zum Abdichten zylindrischer Hohlräume gegen da Durchtritt von unter hohem Druck stehenden gasförmigen oder flüssigen Mitteln, beispielsweise zum Prüfen der Dichtigkeit von Rohrverbindungen.

Um Undichtigkeiten an Verbindungen zwischen Hohlkörpern, beispielsweise zwischen zwei Rohren, zu beseitigen, ist es üblich die Verbindungsstelle einer Leckprüfung zu unterwerfen. Dabei wird ein unter Druck stehendes Prüfmittel auf die Prüfstelle geleitet und der Druck überprüft. Ein Druckabfall zeigt eine Undichtigkeit an. Dabei befinden sich die Dichtungskörper zu beiden Seiten der zu überwachenden Prüfstelle. Sie bilden zwischen sich eine Prüfkammer. Die mit dem entsprechenden Abstand zueinander angeordneten Dichtungskörper vergrößern ihren Durchmesser unter axialer Druckbelastung, so daß der Ringraum zwischen dem die Dichtungskörper tragenden Prüfwerkzeug und dem Innenumfang des Rohres abgedichtet wird. So zeigt beispielsweise die DE 37 00 384 C2 ein Gerät zum Prüfen der Gasdichtigkeit von Rohrverbindungen bei dem die Dichtungskörper auf einem tragenden Geräteschaft angeordnet sind. Sie weisen lamellenförmige Armierungselemente mit radial gerichteten, im Ausgangszustand aneinanderliegenden Seitenflächen aus. Die Armierungselemente können auch einen im wesentlichen kegelstumpfförmigen Querschnitt haben. Sie sind derart angeordnet, daß im Ausgangszustand Spalten zwischen den benachbarten Elementen bestehen, die bei einer Durchmesservergrößerung des Dichtungskörpers verengt, jedoch nicht vollständig geschlossen werden können, da sich in den Spalten elastomeres Material des elastischen Dichtungskörpers befindet. Die radiale Dehnbarkeit ist dadurch begrenzt.

Der Erfindung liegt die Aufgabe zugrunde, Dichtungskörper nach dem Gattungsbegriff des Patentanspruchs 1 so auszubilden, daß eine größere radiale Dehnfähigkeit erreicht wird. Dadurch soll sichergestellt werden, daß Dichtungskörper in der Lage sind, größere Rohrtoleranzen zu überbrücken. Dichtungskörper haben häufig auf ihrem Weg zur Einsatzstelle Engstellen in Rohren oder lange, enge Rohrstrecken zu passieren. Sie müssen trotzdem in der Lage sein, in den anschließenden erweiterten Rohrbereichen für eine ausreichende Dichtung durch das Anpressen ihres zu vergrößernden Umfangs an den Rohrinnenmantel zu sorgen. Dabei soll verhindert werden, daß sich elastomeres Material, beispielsweise Gummi, durch die aufzubringenden hohen Dichtungsdrücke zwischen die lamellenförmigen Armierungselemente und den abzudichtenden Innenmantel eines Rohres quetschen kann. Die Erfindung löst diese Aufgabe durch die kennzeichnenden Merkmale des Patentanspruchs 1.

Die Lamellen sind in der Lage, sich bei der Übertragung axialer Schubkräfte auf den Dichtungskörper mit ihren freien Enden, ähnlich den Streben eines Schirmes, aufzustellen oder zu spreizen. Das elastomere Material des Dichtungskörpers vor den am Hohlkörpermantel anliegenden Lamellenenden wölbt sich auf und führt zu einer Abdichtung am Innenmantel des Hohlkörpers. Das elastische Material kann sich jedoch nicht nach vom zwischen die Lamellen und die Dichtfläche hindurch- oder hineinquetschen. Zur Unterstützung dieser Wirkung können die Lamellen unmittelbar aneinander gleiten, da sie im Querschnitt keilförmig oder konisch ausgebildet sind und unmittelbar aneinanderliegen, wobei die Seitenflächen der einen äußeren Ring bildenden Lamellen radial auswärts divergieren und die Seitenflächen der inneren Lamellen radial auswärts konvergieren. Bei der Durchmesservergrößerung können die Lamellen somit unmittelbar aufeinandergleiten und lassen keinen Spalt zwischen sich entstehen. Da die am Stützring anliegenden Enden der Lamellen abgerundet sind, wird an der anliegenden Stützfläche des Stützrings eine Wälzbewegung unterstützt. Zur besseren Führung ist der Stützring mit einer kreisförmigen Vertiefung versehen, die am Außenrand konisch gestaltet ist und als Anschlagfläche für die Lamellen dient. Um eine gute Weitung des Dichtungskörpers zu ermöglichen, reichen die lamellenförmigen Armierungselemente, ausgehend von dem am Stützring anliegenden Ende, bis etwa zur halben Axiallänge. Beim Nachlassen der axialen Dichtkraft kehrt der Dichtkörper in seine ursprüngliche Form mit seinem ursprünglichen Durchmesser zurück.

In der Zeichnung ist ein Ausführungsbeispiel der Erfindung schematisch dargestellt und nachstehend erläutert. Es zeigen:
- Figur 1: einen Längsschnitt durch einen aufeinem Tragschaft eines Prüfgerätes sitzenden Dichtungskörper innerhalb eines rohrförmigen Hohlkörpers und im Ausgangszustand,
- Figur 2: einen Querschnitt durch die Dichtungskörper gemäß. Figur 1,
- Figur 3: den Dichtungskörper gemäß Figur 1 in dichtendem Zustand,
- Figur 4: einen Querschnitt durch den Dichtungskörper gemäß Figur 3 und
- Figur 5: ein Armierungselement in Verbindung mit dem Stützring in vergrößertem Maßstab.

Innerhalb eines Rohres 1 befindet sich ein ring- oder hülsenförmiger Dichtungskörper 2 aus einem elastomeren Material, der an seinem in Schubrichtung vorderen Ende mit lamellenförmigen Armierungselementen 3 und 4 versehen ist, mit denen sich der Dichtungskörper an einem Stützring 5 abstützt. Der Dichtungskörper 2 sitzt auf einer Schubhülse 6, deren hinteres Ende absatzartig zu einem größeren Durchmesser überführt. Die Schubhülse 6 sitzt verschiebbar auf einem Tragschraft oder Dorn 7. Dessen hinteres Ende ist ebenfalls entsprechend dem Innendurchmesser des hinteren Schubhülsendurchmessers mit einem größeren Durchmesser versehen. Zwischen dem äußeren Absatz der Schubhülse 6 und dem hinteren Ende des Druckkörpers 2 ist ein Druckring 8 zur Übertragung der Schubkraft auf das elastomere Material des Dichtungskörpers angeordnet. Der Stützring 5 liegt mit seiner Rückseite an einem Hohlzylinder 9 an. Dessen vorderes Ende wird durch eine Schraubmutter 10 auf einem Gewindezapfen 11 des Tragschaftes 7 arretiert. Über eine Bohrung 12 im Tragschaft 7 kann hydraulisches oder pneumatisches Druckmittel in den Ringraum 13 zwischen dem Tragschaft 7 und der Schubhülse 6 geführt werden.

Der Dichtkörper 2 kann im ungespannten Zustand eine Rohrverengung 14 passieren, um einen dahinterliegenden Rohrabschnitt mit einem größeren Durchmesser zu erreichen.

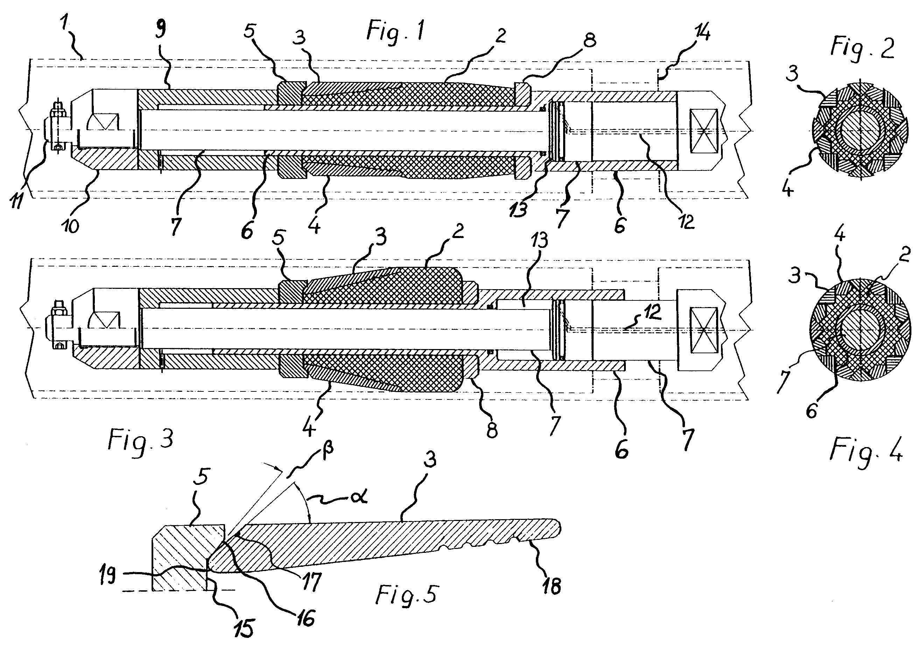

Um das Rohr abzudichten, wird über die Bohrung 12 das hydraulische oder pneumatische Druckmittel in den Innenraum 13 gebracht, der sich unter dem Druck des zugeführten Arbeitsmittels durch Verschiebung der Schubhülse 6 vergrößert. Der Druck verleiht der Schubhülse 6 eine Schubkraft, die über den Druckring 8 auf das elastomere Material des Dichtungskörpers 2 übertragen wird. Das elastomere Material kann radial lediglich bis zur Anlage am Rohrinnenmantel ausweichen. Die lamellenförmigen Armierungselemente 3 und 4 verhindern das Hineindrücken des elastomeren Materials des Druckkörpers 2 in den Ringraum zwischen dem Stützring 5 und dem Innenmantel des Rohres, denn die sich konisch verjüngenden hinteren Enden der Armierungselemente 3 und 4 spreizen sich unter der axialen Schubkraft und werden fest gegen den Innenmantel des Rohres gepreßt. Die vorderen Enden sind zur Unterstützung und Erleichterung dieser Spreizbewegung abgerundet, wie insbesondere der Figur 5 zu entnehmen ist. Mit diesem Ende liegen die Armierungselemente in einer ringförmigen Vertiefung 15 am Stützring. Der Außenrand 16 der Vertiefung 15 ist konisch gestaltet und dient als Anschlag für die vordere Kante 17 der Armierungselemente. Diese Kante ist unter einem Winkel α gegen die im Ruhezustand axial gerichtete obere Kante geneigt. Der Winkel β bestimmt den Freiraum zwischen der vorderen Kante 17 und der Anschlagfläche 16 des Stützringes 5 im entspannten Zustand oder Ruhezustand des Dichtungskörpers. Die radial nach innen weisende Kante 18 der Armierungselemente zeigt eine radial auswärts weisende Schräge, wodurch der Spreizvorgang der Elemente nach außen, wie insbesondere der Figur 3 zu entnehmen ist, erleichtert wird.

Die Armierungselemente 3 und 4 befinden sich im Ruhezustand auf unterschiedlichen Radien, wie die Figur 2 zeigt. Im Dichtungszustand werden sowohl die äußeren Elemente 3 als auch die inneren 4 nicht nur gespreizt, sondern gleichzeitig radial nach außen gepreßt. Dabei gleiten sie infolge ihrer konischen Querschnitte unter ständigem Kontakt radial nach außen, so daß kein elastomeres Material zwischen die Gleitflächen treten kann.

Mit einem erfindungsgemäß gestalteten Dichtungskörper können sehr große Durchmesserdifferenzen überbrückt werden, so daß Engstellen innerhalb eines Rohres oder sehr enge Rohrstrecken passiert werden können. Diese Fähigkeit ist insbesondere bei der Wahrnehmung von Dichtungsaufgaben zwischen Rohrsträngen und dem umgebenden Gebirge von Wichtigkeit, da gerade dort häufig Engstellen passiert werden müssen. Die Dichtdrücke, die bei einer erfindungsgemäßen Konstruktion zur Anwendung gelangen können, erreichen Größen von 1000 bar und darüber. Der Einsatz des Erfindungsgegenstandes ist nicht auf das Testen von Rohrverbindungen beschränkt. Es können beliebige Hohlräume durch den Erfindungsgegenstand in Abschnitte unterschiedlicher Drücke unterteilt werden.

## Patentansprüche

1. Ring- oder hülsenförmiger, in Axialrichtung spannbarer Dichtungskörper aus elastomerem Material mit in den Außenumfang eingebetteten, sich axial erstreckenden, lamellenförmigen Armierungselementen, mit welchen der Dichtungskörper frontseitig an einem Stützring anliegt und an seinem gegenüberliegenden Ende von einem Druckring begrenzt wird, insbesondere zum Abdichten zylindrischer Hohlräume gegen den Durchtritt von unter hohem Druck stehenden gasförmigen oder flüssigen Mitteln, beispielsweise zum Prüfen der Dichtigkeit von Rohrverbindungen, dadurch gekennzeichnet, daß die Lamellen (3, 4) an ihren dem Stützring (5) zugewandten Enden abgerundet sind, daß sie mit Abstand vor dem druckringseitigen Ende des Dichtungskörpers (2) enden, und daß ihre radial inneren Kanten (18), ausgehend von den abgerundeten Enden, radial auswärts weisend abgeschrägt sind.

2. Dichtungskörper nach Anspruch 1, dadurch gekennzeichnet, daß die Lamellen unmittelbar aneinanderliegen und ihre sich berührenden Seitenflächen als Gleitflächen ausgebildet sind.

3. Dichtungskörper nach Anspruch 1 oder 2, dadurch gekennzeichnet, daß die Lamellen kellförmig aufeinandergleitend ausgebildet sind und bei entspanntem Zustand des Dichtungskörpers abwechselnd radial äußere und radial innere Positionen am Außenumfang des Dichtungskörpers einnehmen.

4. Dichtungskörper nach Anspruch 3, dadurch gekennzeichnet, daß die Gleitflächen der äußeren Lamellen (3) radial auswärts divergieren, die der inneren Lamellen radial auswärts konvergieren.

5. Dichtungskörper nach einem der Ansprüche 1 bis 4, dadurch gekennzeichnet, daß der Stützring (5) zu Führungszwecken in eine kreisförmige Vertiefung (15) des Stützrings greift.

6. Dichtungskörper nach Anspruch 5, dadurch gekennzeichnet, daß der Außenrand der Vertiefung konisch gestaltet ist und als Anschlagfläche (16) für die Lamellen dient.

7. Dichtungskörper nach einem der Ansprüche 1 bis 6, dadurch gekennzeichnet, daß die Rundung (19) der Lamellen zur Anlage an die Anschlagfläche (16) in eine gerade Kante (17) übergeht.

8. Dichtungskörper nach einem der Ansprüche 1 bis 7, dadurch gekennzeichnet, daß die dem Stützring abgewandten Enden der Lamellen zur Vermeidung von Materialabrissen abgerundet sind.

9. Dichtungskörper nach einem der Ansprüche 1 bis 8, dadurch gekennzeichnet, daß die Länge der Lamellen etwa der halben Länge des Dichtungskörpers (2) im entspannten Zustand entspricht.

10. Dichtungskörper nach einem der Ansprüche 1 bis 9, dadurch gekennzeichnet, daß die Lamellen in das elastomere Material einvulkanisiert sind.
